# EUROPEAN PATENT SPECIFICATION

(11) **EP 3 130 084 B1**
(45) Date of publication and mention of the grant of the patent: **12.08.2020**
(21) Application number: 14888657.5
(22) Date of filing: 07.04.2014
(51) Int. Cl.: H04B 7/04, H04J 11/00, H04L 5/00

(54) **CLIENT SPECIFIC FREQUENCY OFFSET ESTIMATION COPYRIGHT NOTICE**
COPYRIGHT-HINWEIS MIT KUNDENSPEZIFISCHER FREQUENZ-OFFSET-SCHÄTZUNG
ESTIMATION DE DÉCALAGE DE FRÉQUENCE SPÉCIFIQUE À UN CLIENT

(43) Date of publication of application: 15.02.2017
(73) Proprietor: Intel IP Corporation, Santa Clara, CA 95054 (US)
(72) Inventor: CHEN, Xiaogang, Portland, OR 97229 (US); LI, Honggang, Beijing 100080 (CN); LI, Qinghua, San Ramon, California 94582 (US); PERAHIA, Eldad, Portland, Oregon 97229 (US); KENNEY, Thomas J., Portland, Oregon 97229 (US)
(74) Representative: HGF
(86) International application number: PCT/CN2014/074873
(87) International publication number: WO 2015/154213

(56) References cited:
- WO-A1-2012/148487
- WO-A1-2012/173326
- WO-A1-2015/143686
- CN-A- 1 658 528
- CN-A- 1 795 644
- US-A1- 2008 192 776
- US-A1- 2011 044 271

## Description

### TECHNICAL FIELD

Embodiments pertain to wireless networks such as Wireless LANS (WLANs). Some embodiments relate to estimating transmission parameters in WLAN frames. Some additional embodiments relate particularly to estimating transmission parameters in WLAN frames for use in Uplink Multiple User Multiple Input Multiple Output (MU-MIMO) systems.

### BACKGROUND

Multiple Input Multiple Output (MIMO) systems leverage the phenomenon known as multipath in order to increase the amount of data that can be sent at the same time and on the same frequency. In some examples, this increase in data is dedicated to one client, increasing the effective bandwidth for that client by the number of spatial streams. This is called Single User MIMO (SU-MIMO). In some examples, multiple clients may be served simultaneously by transmitting or receiving from these multiple clients at the same time and frequency but utilizing different spatial streams for each client. Utilizing MIMO to serve multiple clients is termed MU-MIMO, or Multiple User MI MO. MU-MIMO may be implemented in the downlink (e.g., from the access point (AP) to wireless stations (STAs)) or the uplink (e.g., from the wireless stations (STAs) to the access points (AP)).

WO 2015/143686 A1 discloses a method for providing proper channel estimation and frame reception in uplink MU-MIMO by changing the way transmission parameters from the VHT-SIG-A are communicated to recipients in the preamble.

WO 2012/173326 A1 discloses a method of transmitting and receiving a data unit based on uplink MU-MIMO by transmitting a signal protection frame comprising a group ID field indicating a MIMO transmission STA group and a spatial stream field indicating a number of spatial streams allocated to each member STA included in the MIMO transmission STA group.

### BRIEF DESCRIPTION OF THE DRAWINGS

FIG. 1 shows an example 802.11 ac physical layer convergence protocol data unit (PPDU) including preamble used for downlink SU-MIMO according to some examples of the present disclosure.
FIG. 2 shows two examples of pilots inserted at the same subcarriers and at different times according to some examples of the present disclosure.
FIG. 3 shows a flowchart of a method of a STA sending an UL MU- MIMO packet according to some examples of the present disclosure.
FIG. 4 shows a flowchart of a method of an AP receiving UL MU- MIMO packets according to some examples of the present disclosure.
FIG. 5 shows a flowchart of a method of a STA sending UL MU-MIMO packets according to some examples of the present disclosure.
FIG. 6 shows a flowchart of a method of an AP receiving UL MU- MIMO packets according to some examples of the present disclosure.
FIG. 7 shows an example section of a preamble with two Frequency offset estimation (FOE) fields according to some examples of the present disclosure.
FIG. 8 shows a flowchart of a method of sending UL MU-MIMO packets according to some examples of the present disclosure.
FIG. 9 shows a flowchart of a method of receiving UL MU-MIMO packets according to some examples of the present disclosure.
FIG. 10 shows a logical schematic of an AP and a STA according to some examples of the present disclosure.
FIG. 11 is a block diagram illustrating a machine upon which one or more embodiments may be implemented according to some examples of the present disclosure.

### DETAILED DESCRIPTION

The Institute for Electrical and Electronics Engineers (IEEE) has promulgated the 802.11 family of standards which specify requirements for compatible Wireless Local Area Networks (WLANs). MIMO support for 802.11 networks was introduced in 802.1 In and downlink MU-MIMO support was introduced in 802.11ac. 802.11 networks do not currently support uplink MU-MIMO.

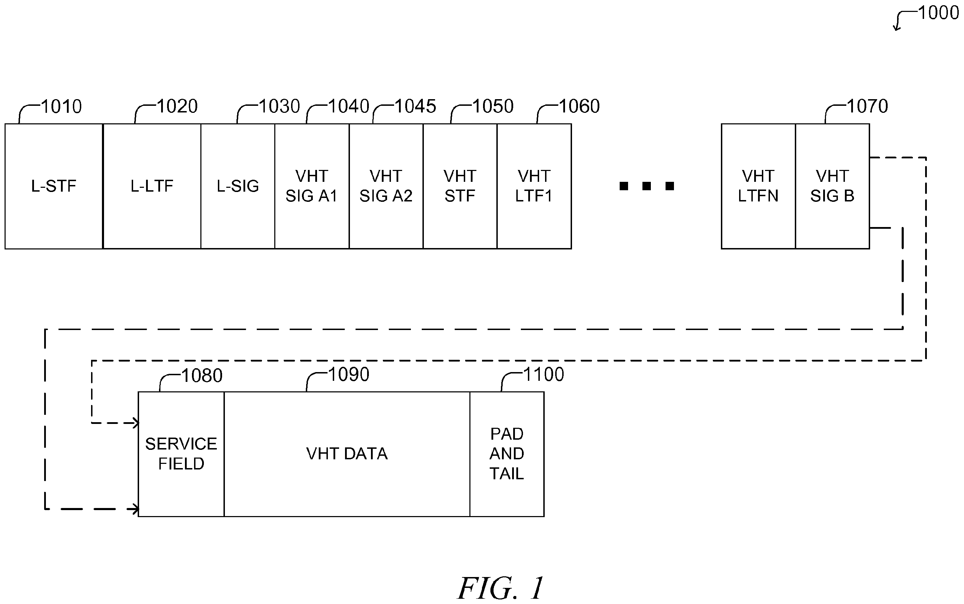

In 802.11 networks, a preamble is added by the sender to transmissions over the wireless medium. This preamble is utilized by the receiver to allow the receiver to detect the transmission (called a packet or frame), estimate various channel properties, get information about the modulation and coding schemes of the transmission and get information on the payload of the frame. FIG. 1 shows an example 802.11ac physical layer convergence protocol data unit (PPDU) including a preamble used for downlink SU-MIMO according to some examples of the present disclosure. The preamble may include all the fields before the VHT DATA field 1090.

A Legacy Short Training Field (L-STF 1010), a Legacy Long Training Field (L-LTF 1020), and a Legacy Signal Field (L-SIG) 1030 are used by legacy devices that support older versions of 802.11 (e.g., pre-802.11n) to allow those devices to share the network with newer devices. These fields allow the legacy devices (e.g., such as devices supporting 802.11g) on the network to detect a packet, determine that the packet is not addressed to them, and to set their network allocation vectors (NAV) so that they do not transmit any interfering frames during the time the received frame occupies the wireless media. Non-legacy devices may also utilize these fields to determine a length of the packet.

The Very High Throughput (VHT) fields are modulated next. VHT SIGNAL A (including VHT-SIG-A1 1040 and VHT-SIG-A2 1045) includes transmission parameters that allow the receiver to decode the rest of the packet. The VHT Short Training Field (VHT-STF) 1050 allows for accurate power estimates for automatic gain control and other parameter estimations for the channel between each individual user STA and the AP. The VHT Long Training Fields 1-N (VHT-LTF) 1060 allow for MIMO channel estimation. The VHT-SIG-B 1070 may indicate the length of the useful data in the packet to allow a user to shut-off the receiver to save power after the useful data has been received. Service field 1080, VHT Data 1090 and padding and tail bits 1100 are transmitted next.

This preamble structure is designed for downlink (DL) SU (single user) - MIMO and as currently constructed, does not work for uplink MU-MIMO. In particular, because multiple stations are transmitting their preambles at the same time and on the same frequency resources the AP has no way of separating the signals from each other and performing the required channel estimations (e.g., frequency offset correction/estimation).

Disclosed in some examples are devices (e.g., APs and STAs), systems, methods, and machine readable mediums for allowing proper channel estimations (e.g., frequency offset estimation) in MU UL-MIMO systems. In some examples, each STA is allowed to send a signal on the same Orthogonal Frequency Division Multiplexing (OFDM) tone across different times of the preamble. By checking the phase difference across the different symbols in the preamble, an access point (AP) may estimate the frequency offset. A tone as used herein is another term for carrier. For example, in OFDM systems the bandwidth of the system is divided into many different orthogonal carriers which consist of a portion of the bandwidth.

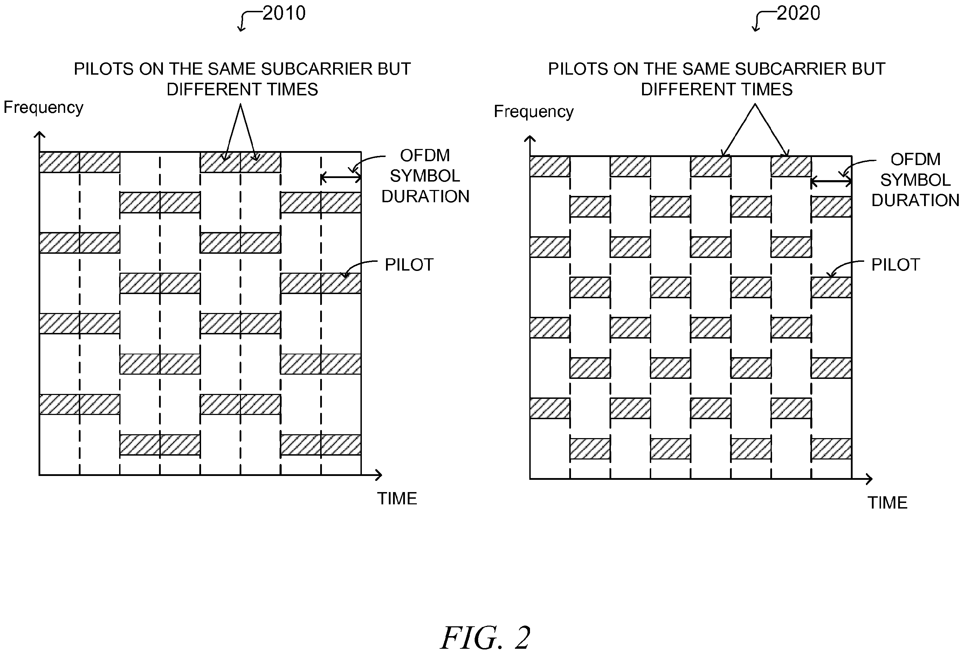

In some examples, this may be accomplished by utilizing pilot symbols inserted into the VHT-LTF portion of the preamble. In these examples, the available pilot tones may be allocated such that each STA may have exclusive use of one or more of the available pilot tones. That is, each STA may exclusively transmit pilot symbols on certain pre-determined pilots at certain predetermined times during transmission of the VHT-LTF portion of the preamble. The AP, knowing these pilot allocations in advance, may utilize the pilots for estimation of each STA's frequency offset. FIG. 2 shows examples of pilots inserted at the same subcarrier but at different times according to some examples of the present disclosure. 2010 shows a Frequency/Time chart with pilots on the same subcarrier but at different, consecutive times and 2020 shows a Frequency/Time chart with pilots on the same subcarrier but alternating in time.

In other examples, instead of allocating specific pilot tones to specific STA, the data subcarriers of the VHT-LTFs may be allocated in a similar fashion to specific STA (either based on time division, or frequency division). The AP may use the STA specific VHT-LTF data subcarriers to estimate the frequency offset corrections.

In still other examples, instead of allocating specific pilot or VHT-LTF resources, one or more symbols may be added to the preamble for UL MU-MIMO frames that are specific for each client and specifically enable frequency offset estimation. The AP may use the STA specific portions of the FOE symbols to estimate the frequency offset correction.

### Making use of client specific pilot tones

Systems operating according to the 802.11 family of standards make use of pilot symbols transmitted on pilot tones. These pilot symbols are utilized to allow for channel measurements. Pilot symbols on the pilot tones are inserted into data transmissions on the wireless medium. For example, the fields of the preamble from FIG. 1 may have pilot symbols inserted into them before transmission.

In some examples, the Access Point may allocate exclusive use of particular pilot tones to UL MU-MIMO STAs for insertion of pilot symbols into the VHT-LTFs 1 through N. By checking the phase difference across different VHT-LTFs for the same UL MU-MIMO STA, an AP can estimate the frequency offset of each STA. In some examples, the pilot tones of the VHT-LTFs may be frequency division multiplexed. One non-limiting example may include the following frequency/time allocations (with 4 client stations and 4 LTFs):

| Frequency/Time | LTF 0 | LTF 1 | LTF 2 | LTF 3 |
|---|---|---|---|---|
| Pilot tone 0 | STA1 | STA1 | STA1 | STA1 |
| Pilot tone 1 | STA2 | STA2 | STA2 | STA2 |
| Pilot tone 2 | STA3 | STA3 | STA3 | STA3 |
| Pilot tone 3 | STA4 | STA4 | STA4 | STA4 |

It should be noted that the above presented allocation is merely an example and one of ordinary skill in the art with the benefit of Applicants' disclosure will appreciate that other allocations may be used.

In other examples, the pilot tones may be both frequency and time division multiplexed. For example (with 4 client stations and 4 LTFs):

| Frequency/Time | LTF 0 | LTF 1 | LTF 2 | LTF 3 |
|---|---|---|---|---|
| Pilot tone 0 | STA1 | STA1 | STA2 | STA2 |
| Pilot tone 1 | STA1 | STA1 | STA2 | STA2 |
| Pilot tone 2 | STA3 | STA3 | STA4 | STA4 |
| Pilot tone 3 | STA3 | STA3 | STA4 | STA4 |

Again, it should be noted that the above presented allocation is merely an example and one of ordinary skill in the art with the benefit of Applicants' disclosure will appreciate that other allocations may be used.

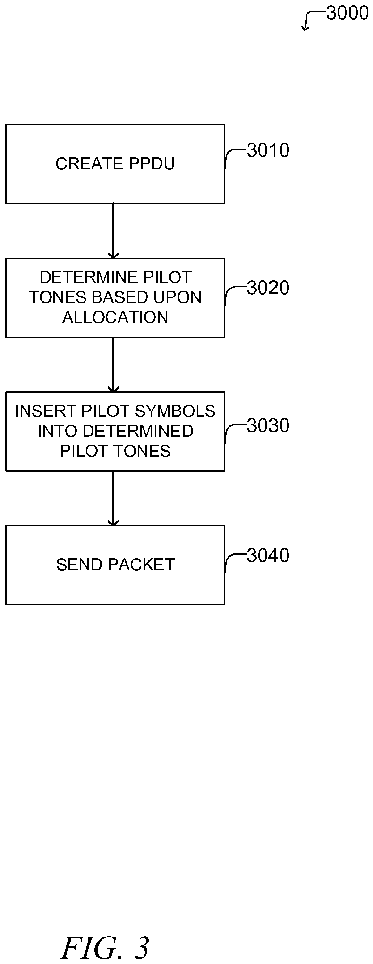

FIG. 3 shows a flowchart of a method 3000 of a STA sending an UL MU-MIMO packet according to some examples of the present disclosure. At operation 3010, a PPDU is created. For example, the PPDU may be created by a physical layer by adding the preamble to a medium access control (MAC) layer protocol data unit (PDU). An example PPDU is shown in FIG. 1. At operation 3020 the STA may determine which pilot tones to insert pilot symbols into. In some examples, the assigned pilot tones are pre-allocated by the AP. This pre-allocation may be done based upon pre-exchanged signaling with the AP (e.g., previous MAC or PHY layer signaling). At operation 3030 the pilot symbols are inserted into the determined pilot tones and at 3040 the packet is sent.

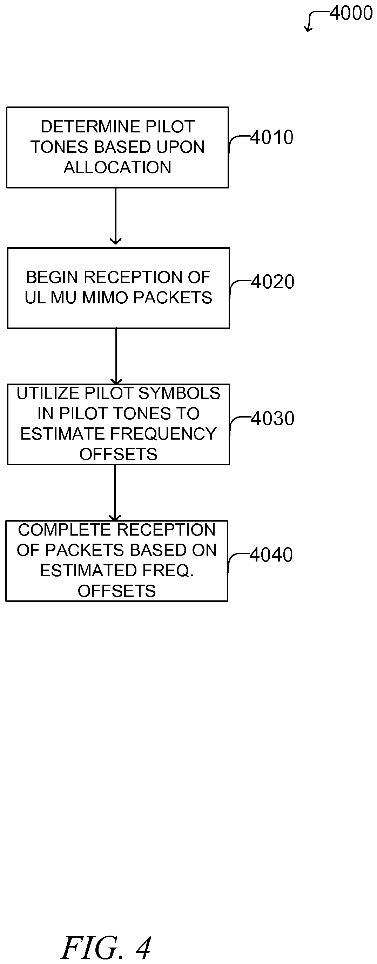

FIG. 4 shows a flowchart of a method 4000 of an AP receiving UL MU-MIMO packets according to some examples of the present disclosure. At operation 4010 the AP may determine which pilot tones are allocated to which particular client. At operation 4020 the AP may begin receiving the MU-UL MIMO packets. At operation 4030, the AP may utilize received pilot symbols in the allocated pilot tones to estimate various channel parameters, such as the frequency offsets of the UL MU-MIMO STAs. At operation 4040, the AP may complete the reception of the UL MU-MIMO packets utilizing the frequency offset estimations for the STAs participating in the UL MU-MIMO transmission.

### Making use of client specific data tones in the VHT-LTFs

In other examples, instead of allocating different pilot tones to different UL MU-MIMO STA, the pilot tones may be unchanged and the data tones (tones 1 ... M) of the VHT-LTFs 1 ... N may be allocated among different STAs. This allocation may be a frequency and time division scheme. To restate: each of the 1... N VHT-LTF may be subdivided amongst the available STA based on carrier. For example, if the AP has four STA that are going to engage in an UL MU-MIMO transmission, the data tones of the four VHT-LTFs could be allocated to different STAs as follows:

| Frequency/Time | LTF 0 | LTF 1 | LTF 2 | LTF 3 |
|---|---|---|---|---|
| Data tone 0 | STA 1 | STA 1 | STA 3 | STA 3 |
| Data tone 1 | STA 2 | STA 2 | STA 4 | STA 4 |
| Data tone 2 | STA 1 | STA 1 | STA 3 | STA 3 |
| Data tone 3 | STA 2 | STA 2 | STA 4 | STA 4 |
| .......... | ...... | ...... | ...... | ...... |
| Data tone M-1 | STA 1 | STA 1 | STA 3 | STA 3 |
| Data tone M | STA 2 | STA 2 | STA 4 | STA 4 |

Again, it should be noted that the above presented allocation is merely an example and one of ordinary skill in the art with the benefit of Applicants' disclosure will appreciate that other allocations may be used.

In the example above, the data tones with an even index across the 1^{st} and 2^{nd} VHT-LTFs are assigned to STA 1, the data tones with odd index across the 1^{st} and 2^{nd} VHT-LTFs are assigned to STA 2 and the like. At the receiver side, the AP could estimate the channel on data tones with an odd index by interpolation for STA 1 and use a similar approach for other clients. In some examples the AP may use the data tone with even indexes for frequency error correction for STA 1 and 3 and odd indexes for STA 2 and 4. For example, since the AP may only measure the channel of STA 1 from tones with even index (0, 2, 4....M), interpolation may be utilized to get the channel on odd index (1, 3, ... M-1). An example algorithm for simple interpolation may include: H_1 = (H_0+H_2)/2.

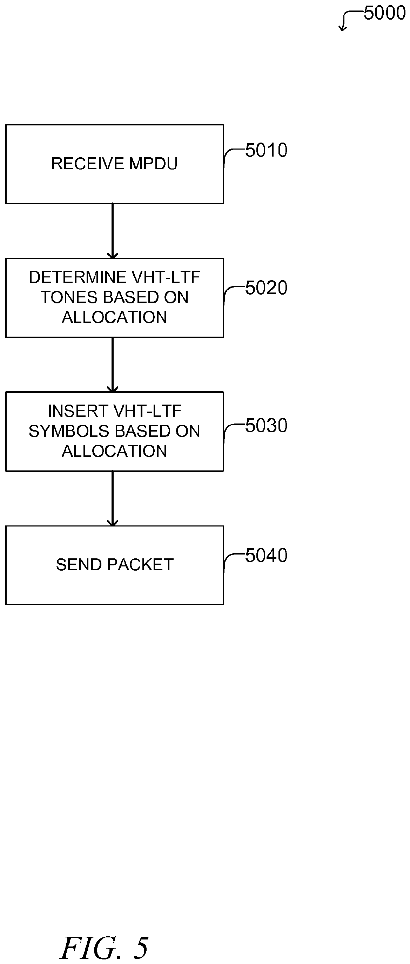

FIG. 5 shows a flowchart of a method 5000 of a STA sending UL MU-MIMO packets according to some examples of the present disclosure. At operation 5010 the PHY layer may receive one or more MPDUs from higher layers (e.g., the MAC layer). At operation 5020 the STA may determine which VHT-LTF tones to utilize based upon the allocation. This allocation may be pre-allocated by the AP. This pre-allocation may be done based upon pre-exchanged signaling with the AP (e.g., previous MAC or PHY layer signaling). At operation 5030 the STA may insert the appropriate VHT-LTF symbols based upon the VHT-LTF allocation. At operation 5040, the STA may send the MU-UL-MIMO packet.

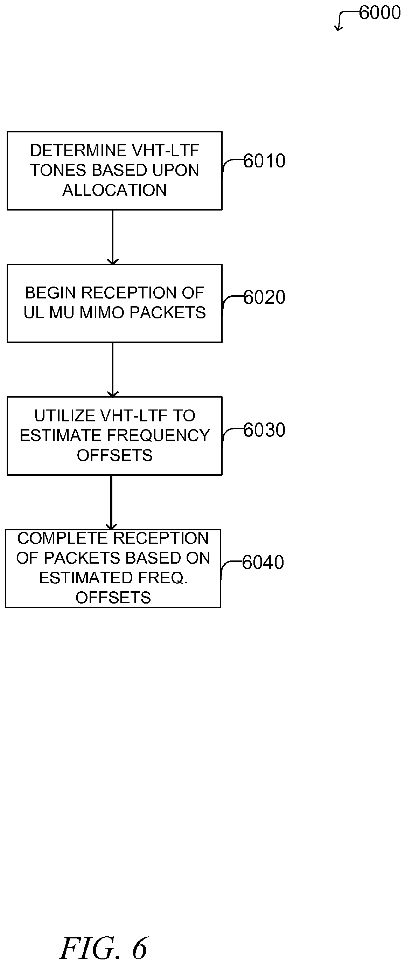

FIG. 6 shows a flowchart of a method 6000 of an AP receiving UL MU-MIMO packets according to some examples of the present disclosure. At operation 6010 the AP may determine which VHT-LTF data tones are allocated to which particular client. At operation 6020 the AP may begin receiving the UL MU-MIMO packets. At operation 6030, the AP may utilize the received VHT-LTF symbols in the allocated VHT-LTF tones to estimate the channel parameters (e.g., frequency offsets) of the uplink clients. At operation 6040, the AP may complete the reception of the UL MU-MIMO packets utilizing the estimated channel parameters (e.g., the frequency offset estimations).

### Making use of additional symbols added to the preamble

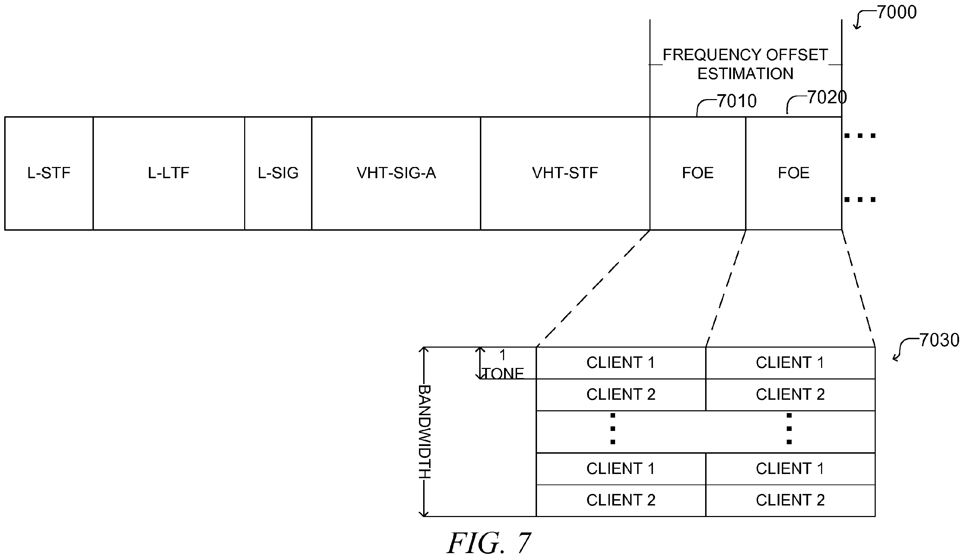

In yet other examples, rather than utilize pilot or data tones in the VHT-LTF, additional symbols could be added to the preamble. For example, an additional (frequency offset estimation) FOE field may be added. FIG. 7 shows an example section of a preamble 7000 with two FOE fields 7010 and 7020 according to some examples of the present disclosure. Together, these FOE fields may be utilized to allow for per client frequency error estimation. In this example, the two FOE symbols may be time and/or frequency divided amongst the clients similarly to how the VHT-LTF was divided. The Example of FIG. 7 shows frequency division multiplexing of the FOE fields. As shown in the detailed view of the FOE field 7030, STA 1 transmits on odd carriers and STA 2 may transmit on even carriers. The AP may estimate the channel parameters such as per STA frequency error estimation by utilizing this allocation of the FOE fields.

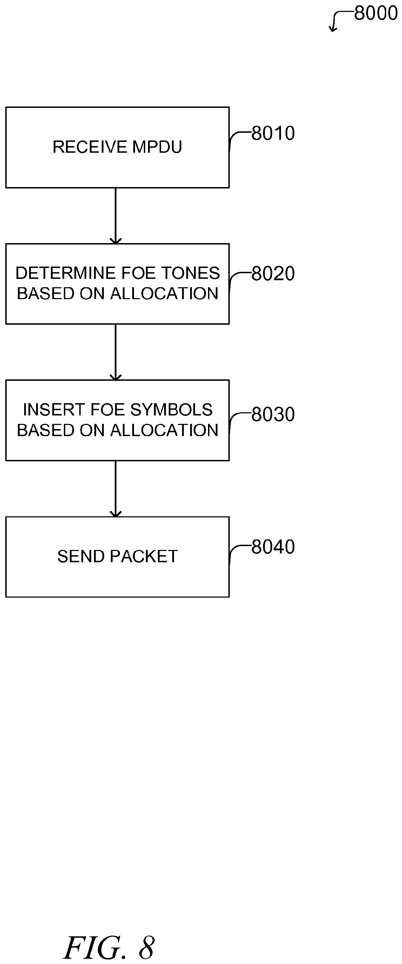

FIG. 8 shows a flowchart of a method 8000 of sending UL MU-MIMO packets according to some examples of the present disclosure. At operation 8010 the PHY layer may receive one or more MPDUs from higher layers (e.g., the MAC layer). At operation 8020 the STA may determine which tones of FOE fields to utilize based upon the allocation. This allocation may be pre-allocated by the AP. This pre-allocation may be done based upon pre-exchanged signaling with the AP (e.g., previous MAC or PHY layer signaling). At operation 8030 the STA may insert the appropriate FOE symbols based upon the FOE allocation. At operation 8040, the STA may send the MU-UL-MIMO packet.

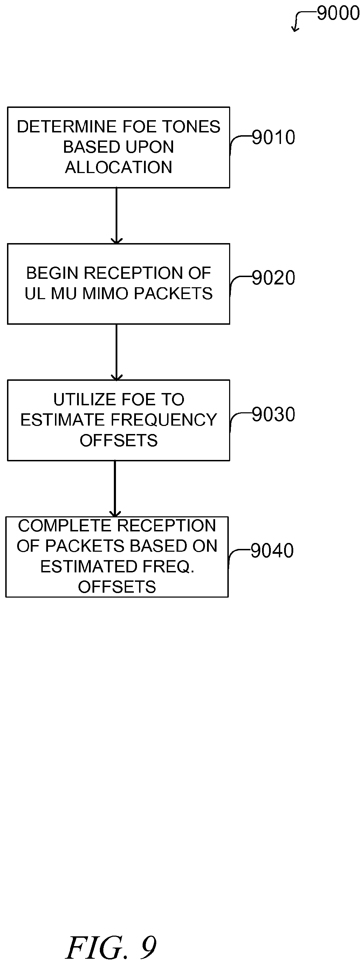

FIG. 9 shows a flowchart of a method 9000 of receiving UL MU-MIMO packets according to some examples of the present disclosure. At operation 9010 the AP may determine which FOE tones are allocated to which particular client. At operation 9020 the AP may begin receiving the MU-UL MIMO packets. At operation 9030, the AP may utilize the received FOE symbols in the allocated FOE tones to estimate channel parameters (such as frequency offsets) of the uplink clients. At operation 9040, the AP may complete the reception of the UL MU-MIMO packets utilizing the calculated channel parameters.

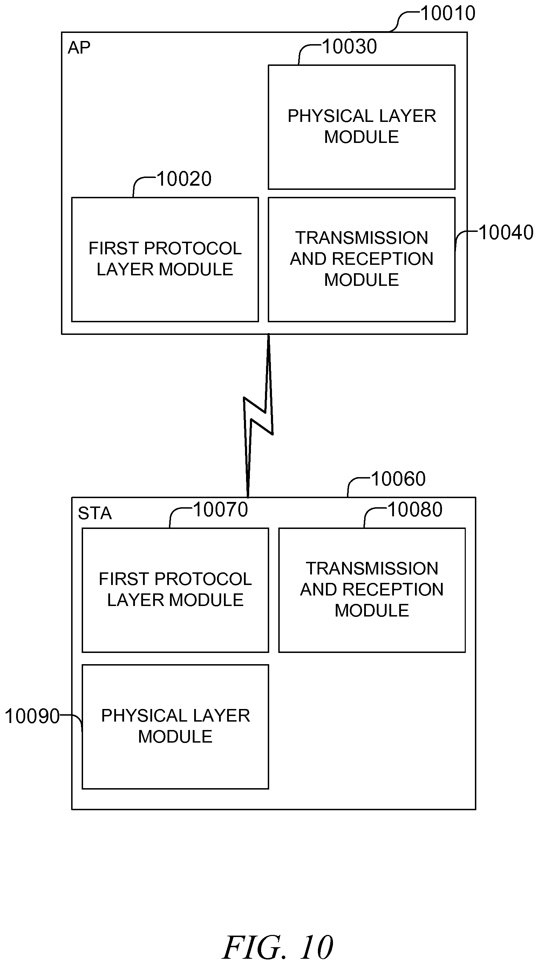

FIG. 10 shows a logical schematic of an AP 10010 and a STA 10060 according to some examples of the present disclosure. The modules shown in FIG. 10 may be implemented in any combination of hardware and software. For example, the modules may be implemented as one or more circuits. First Protocol Layer Module 10020 may be a module implementing a protocol layer above a physical protocol layer for an 802.11 wireless system (or another wireless system). For example, first protocol layer module 10020 may implement a MAC protocol layer. First protocol layer module 10040 may deliver one or more MAC PDUs containing data from higher layer protocols in a protocol hierarchy or management messages to the physical layer module 10030. Physical layer module 10030 may receive the MAC PDUs and add preamble and other physical layer fields to create a PPDU. The PPDU may contain any one or more of the fields of FIGs. 1. In some examples, the preamble may contain additional fields, such as additional FOE fields as shown in FIG. 7. In some examples, the additional FOE fields may be additional VHT-STF fields. Physical layer module 10030 may then pass the PPDU to the transmission and reception module 10050 for transmission on the medium. Physical layer module 10030 may also receive and decode frames detected by transmission and reception module 10040 and extract the MAC PDU from the PPDU and pass the MAC PDU to the first protocol layer module 10020.

Transmission and reception module 10040 may modulate packets on the wireless medium sent from the AP 10010 and may demodulate packets sent to the AP 10010. Transmission and reception module 10040 may receive and detect frames sent to the AP, including UL MU-MIMO frames. In some examples, transmission and reception module 10040 may utilize the pilot bits added to the frames along with the predetermined assignments to calculate one or more transmission properties, including a frequency offset correction. In other examples, the transmission and reception module 10040 may utilize the VHT-LTF data symbols on the VHT-LTF data tones according to the STA's assignment to estimate the transmission properties. In still yet additional examples, transmission and reception module 10040 may utilize the FOE field data tones according to the STA's assignment to estimate the transmission properties.

STA 10060 may include a First Protocol Layer Module 10070 which may be a module implementing a protocol layer above a physical protocol layer for an 802.11 wireless system (or another wireless system). For example, first protocol layer module 10070 may implement a MAC protocol layer. Physical layer module 10090 may receive a MAC PDU and add preamble and other physical layer fields to create a PPDU. The PPDU may contain any one or more of the fields of FIG. 1 and FIG. 7. Physical layer module 10090 may also receive and decode a frame from transmission and reception module and extract the MAC PDU from the PPDU and pass the MAC PDU to the first protocol layer module 10070.

Transmission and reception module 10080 may modulate packets on the wireless medium sent from the STA 10060 and may demodulate packets sent from the AP 10010. Transmission and reception module 10050 may control which pilot symbols are inserted into the appropriate pilot subcarriers at the appropriate time. For example, the transmission and reception module 10050 may insert the pilot symbols into the predetermined pilot tones for the VHT-LTF based upon the STA's assignment for UL MU-MIMO. In some examples, the determined pilot tone assignment may be exclusive to STA 10060. In some examples, the transmission and reception module 10050 may determine the VHT-LTF data tones based on the assignment and insert the VHT-LTF symbols into those data tones based on that assignment. In some examples the assigned VHT-LTF data tones may be exclusive to STA 10060. In other examples, the transmission and reception module 10050 may determine the data tones in FOE field based on the predetermined assignment and insert the FOE field symbols based on that assignment. In some examples, the assigned VHT-LTF data tones may be exclusive to STA 10060.

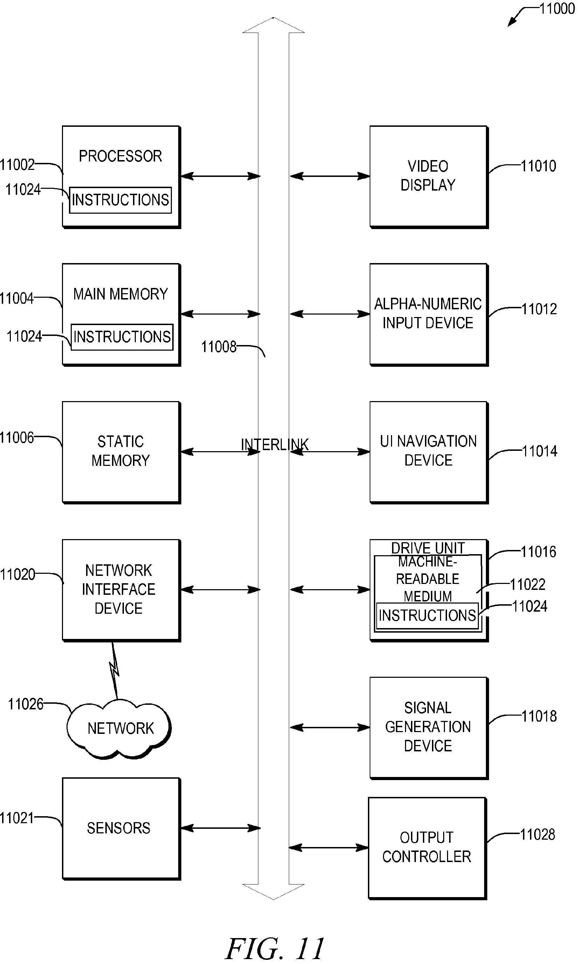

FIG. 11 illustrates a block diagram of an example machine 11000 upon which any one or more of the techniques (e.g., methodologies) discussed herein may perform. In alternative embodiments, the machine 11000 may operate as a standalone device or may be connected (e.g., networked) to other machines. In a networked deployment, the machine 11000 may operate in the capacity of a server machine, a client machine, or both in server-client network environments. In an example, the machine 11000 may act as a peer machine in peer-to-peer (P2P) (or other distributed) network environment. The machine 11000 may be a User Equipment (UE), eNodeB, Access Point (AP), Station (STA), personal computer (PC), a tablet PC, a set-top box (STB), a personal digital assistant (PDA), a mobile telephone, a smart phone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Machine (e.g., computer system) 11000 may include a hardware processor 11002 (e.g., a central processing unit (CPU), a graphics processing unit (GPU), a hardware processor core, or any combination thereof), a main memory 11004 and a static memory 11006, some or all of which may communicate with each other via an interlink (e.g., bus) 11008. The machine 11000 may further include a display unit 11010, an alphanumeric input device 11012 (e.g., a keyboard), and a user interface (UI) navigation device 11014 (e.g., a mouse). In an example, the display unit 11010, input device 11012 and UI navigation device 11014 may be a touch screen display. The machine 11000 may additionally include a storage device (e.g., drive unit) 11016, a signal generation device 11018 (e.g., a speaker), a network interface device 11020, and one or more sensors 11021, such as a global positioning system (GPS) sensor, compass, accelerometer, or other sensor. The machine 11000 may include an output controller 11028, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 11016 may include a machine readable medium 11022 on which is stored one or more sets of data structures or instructions 11024 (e.g., software) embodying or utilized by any one or more of the techniques or functions described herein. The instructions 11024 may also reside, completely or at least partially, within the main memory 11004, within static memory 11006, or within the hardware processor 11002 during execution thereof by the machine 11000. In an example, one or any combination of the hardware processor 11002, the main memory 11004, the static memory 11006, or the storage device 11016 may constitute machine readable media.

While the machine readable medium 11022 is illustrated as a single medium, the term "machine readable medium" may include a single medium or multiple media (e.g., a centralized or distributed database, and/or associated caches and servers) configured to store the one or more instructions 11024.

The term "machine readable medium" may include any medium that is capable of storing, encoding, or carrying instructions for execution by the machine 11000 and that cause the machine 11000 to perform any one or more of the techniques of the present disclosure, or that is capable of storing, encoding or carrying data structures used by or associated with such instructions. Non-limiting machine readable medium examples may include solid-state memories, and optical and magnetic media. Specific examples of machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); Solid State Drives (SSD); and CD-ROM and DVD-ROM disks. In some examples, machine readable media may include non-transitory machine readable media. In some examples, machine readable media may include machine readable media that is not a transitory propagating signal.

The instructions 11024 may further be transmitted or received over a communications network 11026 using a transmission medium via the network interface device 11020. The Machine 11000 may communicate with one or more other machines using one or more networks. Machine 11000 may utilize any one or more of a number of communication and network protocols implemented in some examples by one or more of the components of machine 11000 including the network interface device 11020. Examples include a frame relay, internet protocol (IP), transmission control protocol (TCP), user datagram protocol (UDP), hypertext transfer protocol (HTTP), protocols relating to local area networks (LAN), wide area networks (WAN), packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi®, IEEE 802.16 family of standards known as WiMax®), IEEE 802.15.4 family of standards, a Long Term Evolution (LTE) family of standards, a Universal Mobile Telecommunications System (UMTS) family of standards, peer-to-peer (P2P) networks, among others. In an example, the network interface device 11020 may include one or more physical jacks (e.g., Ethernet, coaxial, or phone jacks) or one or more antennas to connect to the communications network 11026. In an example, the network interface device 11020 may include a plurality of antennas to wirelessly communicate using at least one of single-input multiple-output (SIMO), multiple-input multiple-output (MIMO), or multiple-input single-output (MISO) techniques. In some examples, the network interface device 11020 and/or other components of machine 11000 may wirelessly communicate using Multiple User MIMO techniques. Network interface device 11020 and/or other components of machine 11000 may modulate and demodulate packets utilizing Orthogonal Frequency Division Multiplexing (OFDM) techniques and may implement one or more network protocol layers such as a Medium Access Control layer (MAC layer) a Physical Layer (PHY) and the like.

## Claims

1. A method performed by a wireless station, STA, comprising:
creating (3010) a physical layer convergence protocol data unit, PPDU, (1000) comprising a medium access control protocol data unit, MACPDU, and a preamble (7000);
determining (5020, 8020) an assignment of Orthogonal Frequency Division Multiplexing, OFDM, data tones that are specific to the STA, the assignment containing OFDM data tones in which a portion of the preamble is transmitted;
inserting (5030, 8030) predetermined symbols into the determined assignment of OFDM data tones;
transmitting (3040) the PPDU to an access point, AP, as part of an uplink multi-user multiple input, multiple output, UL MU-MIMO, transmission.

2. The method of claim 1, wherein the predetermined symbols are VHT-LTF symbols, and the portion of the preamble is a
VHT-LTF.

3. The method of claim 1, wherein the predetermined symbols are frequency offset estimation, FOE, symbols, and the portion of the preamble is a FOE
field.

4. The method of claim 1, wherein the assignment is determined based upon previously exchanged messaging with the AP.

5. A machine-readable medium that stores instructions which when performed by a machine, cause the machine to perform operations of any one or more of claims 1-4.

6. A method performed by an Access Point, AP, comprising:
determining (6010, 9010) an assignment of first and a second Orthogonal Frequency Division Multiplexing, OFDM, data tones to a first one of a plurality of STAs participating in an Uplink Multiple User Multiple Input Multiple Output, MU-MIMO, transmission, the first and second OFDM data tones containing a portion of a preamble of a PPDU (7000) transmitted by the plurality of STAs, the assignment giving the first one of the plurality of STA exclusive use of the first and second OFDM data tones;
beginning (4020) reception of a plurality of MU-MIMO packets of the MU-MIMO transmission from the plurality of stations;
determining (6030, 9030) a transmission parameter for a channel between the first one of the plurality of STAs and the AP based upon an analysis of symbols received in the first and second OFDM data tones.

7. The method of claim 6, wherein the
symbols are VHT-LTF symbols, and the portion of the preamble is a VHT-LTF.

8. The method of claim 6, wherein the
symbols are frequency offset estimation, FOE, symbols, and the portion of the preamble is a FOE field.

9. The method of claim 6, comprising:
sending a message to the STA with the assignment.

10. A machine-readable medium that stores instructions which when performed by a machine, cause the machine to perform operations of any one or more of claims 6-9.

11. An Access Point, AP, (10010) comprising:
a physical layer module (10030) configured to:
determine (6010, 9010) an assignment of first and a second Orthogonal Frequency Division Multiplexing, OFDM, data tones to a first one of a plurality of STAs participating in an Uplink Multiple User Multiple Input Multiple Output, MU-MIMO, transmission, the first and second OFDM data tones containing a portion of a preamble of a PPDU (7000) transmitted by the plurality of STAs, the assignment giving the first one of the plurality of STA exclusive use of the first and second OFDM data tones; and
a transmission and reception module (10040) configured to:
begin (4020) reception of a plurality of MU-MIMO packets of the MU-MIMO transmission
from the plurality of stations; and
determine (6030, 9030) a transmission parameter for a channel between the first one of the plurality of STAs and the AP based upon an analysis of symbols received in the first and second OFDM data tones.

12. The AP of claim 11, wherein, the
symbols are VHT-LTF symbols, and the portion of the preamble is a VHT-LTF.

13. The AP of claim 11, wherein, the symbols are frequency offset estimation, FOE, symbols, and the portion of the preamble is a FOE field.

14. A wireless station, STA, (10060) comprising:
a physical layer module (10090) configured to:
create (3010) a physical layer convergence protocol data unit, PPDU, (1000) comprising a medium access control protocol data unit, MACPDU, and a preamble (7000); and
a transmission and reception module (10080) configured to:
determine (5020, 8020) an assignment of Orthogonal Frequency Division Multiplexing, OFDM, data tones that are specific to the STA, the assignment containing OFDM data tones in which a portion of the preamble is transmitted;
insert (5030, 8030) predetermined symbols into the determined assignment of OFDM data tones; and
transmit (3040) the PPDU to an access point, AP, as part of an uplink multi-user multiple input, multiple output, UL MU-MIMO, transmission.

15. The STA of claim 14:
wherein the predetermined symbols are VHT-LTF symbols, and the portion of the preamble is a VHT-LTF; or
wherein the predetermined symbols are frequency offset estimation, FOE, symbols, and the portion of the preamble is a FOE field.

## Patentansprüche

1. Verfahren, das von einer drahtlosen Station, STA, durchgeführt wird, umfassend:
Erstellen (3010) einer Konvergenzprotokoll-Dateneinheit einer Bitübertragungsschicht, Physical Layer Convergence Protocol Data Unit, PPDU, (1000), die eine Medienzugangssteuerung-Protokolldateneinheit, Media Access Control Protocol Data Unit, MACPDU, und eine Präambel (7000) umfasst,
Bestimmen (5020, 8020) einer Zuweisung von Datentönen von orthogonalem Frequenzmultiplex, Orthogonal Frequency Division Multiplexing, OFDM, die spezifisch für die STA sind, wobei die Zuweisung OFDM-Datentöne enthält, in denen ein Abschnitt der Präambel übertragen wird,
Einfügen (5030, 8030) von festgelegten Symbolen in die bestimmte Zuweisung von OFDM-Datentönen,
Übertragen (3040) der PPDU zu einem Zugangspunkt, Access Point, AP, im Rahmen einer Uplink-Multiple-User-Multiple-Input-Multiple-Output-, UL-MU-MIMO-, Übertragung.

2. Verfahren nach Anspruch 1, wobei die festgelegten Symbole VHT-LTF-Symbole sind und der Abschnitt der Präambel ein VHT-LTF ist.

3. Verfahren nach Anspruch 1, wobei die festgelegten Symbole Frequenzversatzschätzungs-, Frequency-Offset-Estimation-, FOE-, Symbole sind und der Abschnitt der Präambel ein FOE-Feld ist.

4. Verfahren nach Anspruch 1, wobei die Zuweisung basierend auf vorherigen mit dem AP ausgetauschten Nachrichten bestimmt wird.

5. Maschinenlesbares Medium, das Anweisungen speichert, die bei Ausführung durch eine Maschine die Maschine veranlassen, Vorgänge nach einem oder mehreren der Ansprüche 1 bis 4 durchzuführen.

6. Verfahren, das von einem Zugangspunkt, Access Point, AP, durchgeführt wird, umfassend:
Bestimmen (6010, 9010) einer Zuweisung erster Datentöne und eines zweiten Datentons von orthogonalem Frequenzmultiplex, Orthogonal Frequency Division Multiplexing, OFDM, zu einer ersten von mehreren STA, die an einer Uplink-Multiple-User-Multiple-Input-Multiple-Output-, UL-MU-MIMO-, Übertragung teilnimmt, wobei die ersten und zweiten OFDM-Datentöne einen Abschnitt einer Präambel einer PPDU (7000) enthalten, die durch die mehreren STA übertragen wird, wobei die Zuweisung der ersten der mehreren STA exklusive Nutzung der ersten und zweiten OFDM-Datentöne gewährt,
Beginnen (4020) des Empfangs mehrerer MU-MIMO-Pakete der MU-MIMO-Übertragung von den mehreren Stationen,
Bestimmen (6030, 9030) eines Übertragungsparameters für einen Kanal zwischen der ersten der mehreren STA und dem AP basierend auf einer Analyse von Symbolen, die in den ersten und zweiten OFDM-Datentönen empfangen werden.

7. Verfahren nach Anspruch 6, wobei die Symbole VHT-LTF-Symbole sind und der Abschnitt der Präambel ein VHT-LTF ist.

8. Verfahren nach Anspruch 6, wobei die Symbole Frequenzversatzschätzungs-, Frequency-Offset-Estimation-, FOE-, Symbole sind und der Abschnitt der Präambel ein FOE-Feld ist.

9. Verfahren nach Anspruch 6, umfassend:
Senden einer Nachricht an die STA mit der Zuweisung.

10. Maschinenlesbares Medium, das Anweisungen speichert, die bei Ausführung durch eine Maschine die Maschine veranlassen, Vorgänge nach einem oder mehreren der Ansprüche 6 bis 9 durchzuführen.

11. Zugangspunkt, Access Point, AP, (10010), umfassend:
ein Bitübertragungsschicht-Modul (10030), zu Folgendem konfiguriert:
Bestimmen (6010, 9010) einer Zuweisung erster Datentöne und eines zweiten Datentons von orthogonalem Frequenzmultiplex, Orthogonal Frequency Division Multiplexing, OFDM, zu einer ersten von mehreren STA, die an einer Uplink-Multiple-User-Multiple-Input-Multiple-Output-, UL-MU-MIMO-, Übertragung teilnimmt, wobei die ersten und zweiten OFDM-Datentöne einen Abschnitt einer Präambel einer PPDU (7000) enthalten, die durch die mehreren STA übertragen wird, wobei die Zuweisung der ersten der mehreren STA exklusive Nutzung der ersten und zweiten OFDM-Datentöne gewährt, und
ein Übertragungs- und Empfangsmodul (10040), zu Folgendem konfiguriert:
Beginnen (4020) des Empfangs mehrerer MU-MIMO-Pakete der MU-MIMO-Übertragung von den mehreren Stationen, und
Bestimmen (6030, 9030) eines Übertragungsparameters für einen Kanal zwischen der ersten der mehreren STA und dem AP basierend auf einer Analyse von Symbolen, die in den ersten und zweiten OFDM-Datentönen empfangen werden.

12. AP nach Anspruch 11, wobei die Symbole VHT-LTF-Symbole sind und der Abschnitt der Präambel ein VHT-LTF ist.

13. AP nach Anspruch 11, wobei die Symbole Frequenzversatzschätzungs-, Frequency-Offset-Estimation-, FOE-, Symbole sind und der Abschnitt der Präambel ein FOE-Feld ist.

14. Drahtlose Station, STA, (10060), umfassend:
ein Bitübertragungsschicht-Modul (10090), zu Folgendem konfiguriert:
Erstellen (3010) einer Konvergenzprotokoll-Dateneinheit einer Bitübertragungsschicht, Physical Layer Convergence Protocol Data Unit, PPDU, (1000), die eine Medienzugangssteuerung-Protokolldateneinheit, Media Access Control Protocol Data Unit, MACPDU, und eine Präambel (7000) umfasst, und
ein Übertragungs- und Empfangsmodul (10080), zu Folgendem konfiguriert:
Bestimmen (5020, 8020) einer Zuweisung von Datentönen von orthogonalem Frequenzmultiplex, Orthogonal Frequency Division Multiplexing, OFDM, die spezifisch für die STA sind, wobei die Zuweisung OFDM-Datentöne enthält, in denen ein Abschnitt der Präambel übertragen wird,
Einfügen (5030, 8030) von festgelegten Symbolen in die bestimmte Zuweisung von OFDM-Datentönen, und
Übertragen (3040) der PPDU zu einem Zugangspunkt, Access Point, AP, im Rahmen einer Uplink-Multiple-User-Multiple-Input-Multiple-Output-, UL-MU-MIMO-, Übertragung.

15. STA nach Anspruch 14:
wobei die festgelegten Symbole VHT-LTF-Symbole sind und der Abschnitt der Präambel ein VHT-LTF ist, oder
wobei die festgelegten Symbole Frequenzversatzschätzungs-, Frequency-Offset-Estimation-, FOE-, Symbole sind und der Abschnitt der Präambel ein FOE-Feld ist.

## Revendications

1. Procédé réalisé par une station sans fil (STA), comprenant les étapes consistant à :
créer (3010) une unité de données sur protocole de convergence de couche physique (PPDU) (1000) comprenant une unité de données sur protocole de contrôle d'accès au support (MACPDU) et un préambule (7000) ;
déterminer (5020, 8020) une attribution de tonalités de données de multiplexage par répartition orthogonale de la fréquence (OFDM) qui sont spécifiques de la STA, l'attribution contenant des tonalités de données OFDM où une partie du préambule est émise ;
insérer (5030, 8030) des symboles prédéterminés dans l'attribution déterminée de tonalités de données OFDM ;
émettre (3040) la PPDU vers un point d'accès (AP) dans le cadre d'une émission multi-utilisateur à entrée multiple sortie multiple en liaison montante (UL MU-MIMO).

2. Procédé selon la revendication 1, dans lequel les symboles prédéterminés sont des symboles VHT-LTF et la partie du préambule est un VHT-LTF.

3. Procédé selon la revendication 1, dans lequel les symboles prédéterminés sont des symboles d'estimation de décalage de fréquence (FOE) et la partie du préambule est un champ FOE.

4. Procédé selon la revendication 1, dans lequel l'attribution est déterminée sur la base d'une messagerie échangée précédemment avec l'AP.

5. Support lisible par machine qui stocke des instructions qui, lorsqu'elles sont réalisées par une machine, amènent la machine à réaliser des opérations de l'une quelconque des revendications 1 à 4.

6. Procédé réalisé par un point d'accès (AP), comprenant les étapes consistant à :
déterminer (6010, 9010) une attribution d'une première et d'une seconde tonalité de données de multiplexage par répartition orthogonale de la fréquence (OFDM) à une première STA d'une pluralité de STA participant à une émission multi-utilisateur à entrée multiple sortie multiple (MU-MIMO) en liaison montante, les première et seconde tonalités de données OFDM contenant une partie d'un préambule d'une PPDU (7000) émise par la pluralité de STA, l'attribution donnant à la première STA de la pluralité de STA une utilisation exclusive des première et seconde tonalités de données OFDM ;
commencer (4020) la réception d'une pluralité de paquets MU-MIMO de l'émission MU-MIMO en provenance de la pluralité de stations ;
déterminer (6030, 9030) un paramètre d'émission pour un canal entre la première STA de la pluralité de STA et l'AP sur la base d'une analyse de symboles reçus dans les première et seconde tonalités de données OFDM.

7. Procédé selon la revendication 6, dans lequel les symboles sont des symboles VHT-LTF et la partie du préambule est un VHT-LTF.

8. Procédé selon la revendication 6, dans lequel les symboles sont des symboles d'estimation de décalage de fréquence (FOE) et la partie du préambule est un champ FOE.

9. Procédé selon la revendication 6, comprenant l'étape consistant à :
envoyer un message à la STA avec l'attribution.

10. Support lisible par machine qui stocke des instructions qui, lorsqu'elles sont réalisées par une machine, amènent la machine à réaliser des opérations de l'une quelconque des revendications 6 à 9.

11. Point d'accès (AP) (10010), comprenant :
un module de couche physique (10030), configuré pour :
déterminer (6010, 9010) une attribution d'une première et d'une seconde tonalité de données de multiplexage par répartition orthogonale de la fréquence (OFDM) à une première STA d'une pluralité de STA participant à une émission multi-utilisateur à entrée multiple sortie multiple (MU-MIMO) en liaison montante, les première et seconde tonalités de données OFDM contenant une partie d'un préambule d'une PPDU (7000) émise par la pluralité de STA, l'attribution donnant à la première STA de la pluralité de STA une utilisation exclusive des première et seconde tonalités de données OFDM ; et
un module d'émission et de réception (10040), configuré pour :
commencer (4020) la réception d'une pluralité de paquets MU-MIMO de l'émission MU-MIMO en provenance de la pluralité de stations ; et
déterminer (6030, 9030) un paramètre d'émission pour un canal entre la première STA de la pluralité de STA et l'AP sur la base d'une analyse de symboles reçus dans les première et seconde tonalités de données OFDM.

12. AP selon la revendication 11, dans lequel les symboles sont des symboles VHT-LTF et la partie du préambule est un VHT-LTF.

13. AP selon la revendication 11, dans lequel les symboles sont des symboles d'estimation de décalage de fréquence (FOE) et la partie du préambule est un champ FOE.

14. Station sans fil (STA) (10060), comprenant :
un module de couche physique (10090), configuré pour :
créer (3010) une unité de données sur protocole de convergence de couche physique (PPDU) (1000) comprenant une unité de données sur protocole de contrôle d'accès au support (MACPDU) et un préambule (7000) ; et
un module d'émission et de réception (10080), configuré pour :
déterminer (5020, 8020) une attribution de tonalités de données de multiplexage par répartition orthogonale de la fréquence (OFDM) qui sont spécifiques de la STA, l'attribution contenant des tonalités de données OFDM où une partie du préambule est émise ;
insérer (5030, 8030) des symboles prédéterminés dans l'attribution déterminée de tonalités de données OFDM ; et
émettre (3040) la PPDU vers un point d'accès (AP) dans le cadre d'une émission multi-utilisateur à entrée multiple sortie multiple en liaison montante (UL MU-MIMO).

15. STA selon la revendication 14,
dans laquelle les symboles prédéterminés sont des symboles VHT-LTF et la partie du préambule est un VHT-LTF ; ou
dans laquelle les symboles prédéterminés sont des symboles d'estimation de décalage de fréquence (FOE) et la partie du préambule est un champ FOE.
